# EUROPÄISCHE PATENTSCHRIFT

(11) **EP 3 467 623 B1**
(45) Veröffentlichungstag und Bekanntmachung des Hinweises auf die Patenterteilung: **16.12.2020**
(21) Anmeldenummer: 18197870.1
(22) Anmeldetag: 01.10.2018
(51) Int. Cl.: G06F 3/01, G05B 19/418

(54) **VERFAHREN FÜR EINEN MONTAGEARBEITSPLATZ, MONTAGEARBEITSPLATZ, COMPUTERPROGRAMM UND COMPUTERLESBARES MEDIUM**
METHOD FOR AN ASSEMBLY WORKSTATION, ASSEMBLY WORKSTATION, COMPUTER PROGRAM AND COMPUTER READABLE MEDIUM
PROCÉDÉ POUR UN POSTE DE TRAVAIL DE MONTAGE, POSTE DE TRAVAIL DE MONTAGE, PROGRAMME INFORMATIQUE ET SUPPORT LISIBLE PAR ORDINATEUR

(30) Priorität: 06.10.2017 DE 102017217834
(43) Veröffentlichungstag der Anmeldung: 10.04.2019
(73) Patentinhaber: Robert Bosch GmbH, 70442 Stuttgart (DE)
(72) Erfinder: Nowak, Rene, 70469 Stuttgart (DE)

(56) Entgegenhaltungen:
- DE-A1- 10 320 557
- JP-A- 2016 213 387
- US-A1- 2017 255 186
- US-B1- 9 299 013
- US-B1- 9 723 248

## Beschreibung

### Gebiet der Erfindung

Die Erfindung betrifft ein Verfahren für einen Montagearbeitsplatz. Des Weiteren betrifft die Erfindung einen Montagearbeitsplatz, ein Computerprogramm und ein computerlesbares Medium.

### Hintergrund der Erfindung

Aus der DE 10 2013 220 107A1 ist der Montagearbeitsplatz bekannt. Bei diesem sind manuelle Montage- und/oder Kommissionierungsprozesse von einem Benutzer ausführbar. Der Montagearbeitsplatz hat eine Arbeitsfläche mit mehreren Behältern für Bauteile. Des Weiteren hat der Arbeitsplatz einen Beamer und einen Tiefenbildsensor.

Aus der US 2017/0255186 A1 ist ein Führungssystem und ein Verfahren bekannt, das sichtbare Indikatoren auf Objekte projiziert, um eine Person anzuleiten. In der US 9,723,248 B1 und der DE 103 20 557 A1 sind jeweilige Systeme offenbart, bei denen Informationen auf eine Werkbank projiziert werden. In der US 9,299,013 B1 wird eine Werkbank durch Sensoren überwacht und dementsprechend visuelle Hinweise projiziert. Aus JP 2016-213387 A ist eine Werkbank bekannt, die visuelle Hinweise anzeigt.

### Offenbarung der Erfindung

Demgegenüber liegt der Erfindung die Aufgabe zugrunde, ein Verfahren für einen Montagearbeitsplatz zu schaffen, das zu einer vereinfachten und sicheren Montage führt. Außerdem ist es die Aufgabe der Erfindung einen Montagearbeitsplatz zu schaffen, mit dem einfach und sicher eine Montage ermöglicht ist. Des Weiteren soll ein Computerprogramm und ein computerlesbares Medium für den Montagearbeitsplatz geschaffen werden.

Die Aufgabe hinsichtlich des Verfahrens wird gelöst gemäß den Merkmalen des Anspruchs 1, hinsichtlich des Montagearbeitsplatzes gemäß den Merkmalen des Anspruchs 10, hinsichtlich des Computerprogramms gemäß den Merkmalen des Anspruchs 11 und hinsichtlich des computerlesbaren Mediums gemäß den Merkmalen des Anspruchs 12.

Vorteilhafte Weiterbildungen der Erfindung sind Gegenstand der Unteransprüche.

Erfindungsgemäß ist ein Verfahren gemäß den Merkmalen des Anspruchs 1 vorgesehen.

Diese Lösung hat den Vorteil, dass mit dem zumindest einem Projektor sowohl Informationen auf der Arbeitsfläche als auch an zumindest einem Materialbehälter bei einem Arbeitsschritt abbildbar sind, womit mit vorrichtungstechnisch einfachem Aufwand und flexibel eine Montage beim Montagearbeitsplatz unterstützt wird. Mit dem Projektor sind die unterschiedlichsten Informationen darstellbar. Mit den Montageinformationen kann beispielsweise eine Anleitung einer Montage projiziert werden. Mit der Markierung ist denkbar einen Montageort aufzuzeigen. Mit der Behältermarkierung kann auf einfache Weise ein zu benutzender Materialbehälter hervorgehoben werden. Beispielsweise kann mit der Behältermarkierung die Position und Größe dargestellt werden.

Vorzugsweise kann die Montageinformation in Form von zumindest einem Bild oder von Bildern und/oder in Form von zumindest einem Video und/oder in Form von Text ausgestaltet sein. Somit kann einfach visuell eine Anleitung eines erforderlichen Arbeitsschritts, beispielsweise für einen Monteur, erfolgen, wobei ein Bild und/oder ein Video und/oder ein Text einfach erfassbar sind. Vorzugsweise wird die Montageinformation auf einen freien Bereich der Arbeitsfläche projiziert, was zu einer besseren Wahrnehmbarkeit führt. Denkbar ist auch den Ort dieser Projektion beliebig zu platzieren.

Mit der Markierung kann beispielsweise eine Position oder ein Ort, beispielsweise bei einem Arbeitsschritt, aufgezeigt sein, bei der ein Bauteil angeordnet, eingebaut oder angebaut werden soll. Beispielsweise ist die Markierung auf einer freien Stelle der Arbeitsfläche vorgesehen, was zu einer hohen Sichtbarkeit führt. Alternativ oder zusätzlich kann die Markierung auf dem zu montierenden Bauteil oder einem Bauteil, bei dem was montiert werden soll, angeordnet sein, was eine einfache Montage ermöglicht.

Vorzugsweise wird die Behältermarkierung auf denjenigen Materialbehälter abgebildet, aus dem beim Arbeitsschritt zumindest ein Bauteil zu entnehmen ist oder der auf sonstige Weise für den Arbeitsschritt erforderlich ist.

Vorteilhafterweise können für den Arbeitsschritt oder einen jeweiligen Arbeitsschritt eine beliebige Anzahl von Montageinformationen, Markierungen oder Behältermarkierungen vorgesehen sein. Insbesondere die Markierung und/oder die Behältermarkierung kann/können in beliebiger Farbe und ein vorbestimmte Form aufweisen, wie beispielsweise einen Kreis oder ein Viereck oder ein Pfeil. Denkbar ist auch als Montageinformation und/oder Markierung und/oder Behältermarkierung ein sonstiges Element, wie beispielsweise ein Piktogramm oder ein Bild von einem Bauteil vorzusehen.

Vorzugsweise ist eine Benutzerschnittstelle vorgesehen, über die von einer Person oder von einem Monteur oder von einem Computer oder von einer Software oder von einem Roboter Daten eingebbar sind. Hierdurch kann/können auf einfache Weise ein Arbeitsschritt oder Arbeitsschritte oder der Arbeitsplan definiert werden. Als Benutzerschnittstelle können beispielsweise eine Tastatur und/oder ein Berührungsbildschirm (Touchscreen) und/oder eine Maus und/oder eine Hand-Verfolgung und/oder eine Gesten-Steuerung und/oder eine Körper-Steuerung und/oder ein sonstiges Eingabemittel vorgesehen sein. Der Bildschirm hat beispielsweise ein linke Bildschirmhälfte und eine rechte Bildschirmhälfte. Denkbar ist auch über die Benutzerschnittstelle eine CAD System oder ähnliches anzuschließen. Über das CAD System können beispielsweise automatisch Informationen generiert werden.

Beim Arbeitsschritt oder bei der Mehrzahl von Arbeitsschritten kann in weiterer Ausgestaltung der Erfindung, beispielsweise über die Benutzerschnittstelle, festgelegt werden oder jeweils festgelegt werden, ob eine Information beim Arbeitsschritt ausgegeben wird. Somit kann innerhalb des Arbeitsplans von allen Möglichkeiten Gebrauch gemacht werden, wobei dann beispielsweise Arbeitsschritte vorhanden sein können, die keine der Informationen nutzen. Somit kann ein flexibler Arbeitsplan geschaffen werden mit den unterschiedlichsten Arbeitsschritten.

In weiterer Ausgestaltung der Erfindung kann der Ort oder können die Orte der Abbildung zumindest einer Information oder eines Teils der Informationen oder aller Informationen für alle Arbeitsschritte gleich sein oder für einen jeweiligen Arbeitsschritt individualisiert im Arbeitsplan angegeben sein. Ist der Ort gleich, so kann bei einem Monteur eine schnellere Informationsaufnahme erfolgen, da er beispielsweise weiß, wohin er sehen muss. Des Weiteren ist beim gleichen Ort oder bei gleichen Orten vorteilhaft, dass hierdurch das Verfahren äußerst einfach ausgestaltet ist. Sind die Orte individuell bei einem Arbeitsschritt einstellbar, so führt dies vorteilhaft zu einer hohen Flexibilität. Mit anderen Worten kann der Ort der Anzeige innerhalb der Projektionsfläche entweder für alle Arbeitsschritte einheitlich vorgegeben oder für jeden Arbeitsschritt individuell im Arbeitsplan angegeben werden. Der Ort der Anzeige kann auch informationsabhängig sein. So ist es beispielsweise vorteilhaft bei Montageinformationen einen einheitlichen Ort vorzugeben. Bei einer Markierung und/oder Behältermarkierung kann dagegen ein individueller Ort für jeden Arbeitsschritt vorgesehen sein. Der Ort kann beispielsweise über den Arbeitsschritt im Arbeitsplan und/oder über die Materialnummer angegeben werden.

Beim Montagearbeitsplatz kann beispielsweise ein Bildschirm vorgesehen sein, um Informationen auszugeben. Handelt es sich bei dem Bildschirm um einen Berührungsbildschirm oder berührungsempfindlichen Bildschirm, so kann dieser zusätzlich als Benutzerschnittstelle dienen, um beispielsweise den Arbeitsplan oder die Arbeitsschritte zu definieren. Denkbar ist auch zwei Bildschirme vorzusehen, beispielsweise einen linken und einen rechten Bildschirm.

Vorzugsweise ist dem Arbeitsschritt oder dem jeweiligen Arbeitsschritt zumindest eine Textinformation und/oder zumindest eine Zahleninformation zugeordnet, die beispielsweise über eine Benutzerschnittstelle eingebbar ist, womit jeder Arbeitsschritt definierbar ist. Beispielsweise kann als Zahleninformation eine Schrittnummer vorgesehen sein, um beispielsweise auf einfache Weise eine Reihenfolge der Arbeitsschritte zu definieren. Denkbar ist als Textinformation einen Schrittnamen und/oder einen Schritttyp und/oder eine Schrittbeschreibung und/oder eine Schrittanmerkung und/oder eine Materialnummer und/oder eine Bauteilnummer und/oder eine Menge, beispielsweise eines Materials oder eines Bauteils, und/oder ein Bauteil und/oder ein Material anzugeben. Dies hat den Vorteil, dass ein jeweiliger Arbeitsschritt bei Bedarf mit einer Vielzahl von Informationen verknüpfbar ist. Vorzugsweise sind die Materialnummer und/oder die Bauteilnummer mit zumindest einem Materialbehälter verknüpft. Somit kann dann der Materialbehälter beispielsweise das Bauteil mit der Bauteilnummer aufweisen und dann beim Arbeitsschritt bei Bedarf beispielswiese mit der Behältermarkierung markiert werden.

Vorzugsweise ist zumindest ein Arbeitsablauf oder ein Ablaufplan bei der Steuereinheit vorgesehen, der dann den Ablauf des oder der Arbeitsschritte aufweist. Bei einer Mehrzahl von Arbeitsplänen können diese in einer Liste angeordnet sein. Es ist dann denkbar, dass über die Benutzerschnittstelle ein Arbeitsplan einfach aus der Liste ausgewählt wird.

In weiterer Ausgestaltung der Erfindung kann dem Arbeitsschritt oder kann einem jeweiligen Arbeitsschritt zumindest eine Verknüpfung zugeordnet sein, die den Arbeitsschritt oder einen Teil der Arbeitsschritte oder einen jeweiligen Arbeitsschritt mit zumindest einer Mediendatei, beispielsweise einem Bild oder einem Video, verknüpft. Der Inhalt der Mediendatei kann dann während der Durchführung des Arbeitsschritts von dem Projektor und/oder dem Bildschirm abgebildet werden. Die Mediendatei ist beispielsweise über einen externen Server, insbesondere über das Intranet oder auch Internet, abrufbar und/oder lokal beim Montagearbeitsplatz gespeichert. Sind mehrere Bildschirme vorgesehen, so kann beispielsweise auch ausgewählt werden, auf welchem Bildschirm die Mediendatei ausgegeben wird.

In einer bevorzugten Ausführungsform der Erfindung kann dem Arbeitsschritt oder kann einem jeweiligen Arbeitsschritt ein Typ der Markierung und/oder eine Position der Markierung, beispielsweise über die Benutzerschnittstelle, zugeordnet werden. Somit kann durch beispielsweise eine Typauswahl der Markierung diese für den Arbeitsschritt oder für einen jeweiligen Arbeitsschritt oder zumindest für einen Teil der Arbeitsschritte individuell und flexibel ausgewählt werden. Die Position der Markierung kann beispielsweise einfach über eine Hand-Verfolgung eingegeben werden. So ist es denkbar, dass bei der Festlegung des Arbeitsschritts mit der Hand eine Position angezeigt wird, die mit der Markierung markiert werden soll. Alternativ oder zusätzlich kann vorgesehen sein, die Markierung per Drag&Drop zu platzieren. Es ist weiter denkbar, dass zu einem jeweiligen Arbeitsschritt eine beliebige Anzahl an Markierungen zuordbar ist, die beispielsweise eine einstellbare oder unterschiedliche Ausgestaltung aufweisen können.

Erfindungsgemäß ist eine Maske auf einem oder dem Bildschirm vorgesehen, über die zumindest ein Arbeitsschritt und/oder der Arbeitsablauf definierbar sind. Erfindungsgemäß ist auch die Maske über einen externen Bildschirm, der kabellos oder über ein Kabel mit der Montagevorrichtung verbunden ist, darzustellen. Eine Benutzerschnittstelle oder die Benutzerschnittstelle ist ebenfalls extern wird kabellos oder über Kabel mit der Montagevorrichtung verbunden .

Vorzugsweise, wenn ein Arbeitsschritt mit einer zugeordneten Materialnummer und/oder Bauteilnummer ausgeführt wird, dann kann der entsprechende Materialbehälter oder die entsprechenden Materialbehälter über den Projektor markiert werden. Alternativ oder zusätzlich kann vorgesehen sein, dass der oder die Materialbehälter mit einer Lichtquelle markiert sind.

In weiterer Ausgestaltung der Erfindung ist denkbar als Schritttyp beim Arbeitsschritt einen Montageschritt vorzusehen, bei dem ein dem Arbeitsschritt zugeordnetes Bauteil montiert wird oder werden soll.

In weiterer Ausgestaltung der Erfindung ist denkbar, dass als Schritttyp ein zu bestätigender Arbeitsschritt vorgesehen ist. Bei diesem kann dann nach der Ausführung des Arbeitsschritts eine Bestätigung, beispielsweise von der Montageperson, über die Benutzerschnittstelle gefordert werden. Beispielsweise kann dann nach der Bestätigung der nächste Arbeitsschritt erfolgen oder der Arbeitsplan zu Ende sein. Beispielsweise handelt es sich bei dem zu bestätigenden Arbeitsschritt um einen zu bestätigenden Montageschritt. Bei diesem kann dann nach der Montage des dem Arbeitsschritt zugeordneten Bauteils eine Bestätigung über die Benutzerschnittstelle gefordert werden. Die Bestätigung des Arbeitsschritts hat den Vorteil, dass eine Montagesicherheit erhöht ist. Somit kann auf einfache Weise festgestellt werden, ob beispielsweise eine Montage tatsächlich erfolgt ist. Die Bestätigung erfolgt beispielsweise über ein Eingabefenster am Bildschirm oder mittels Hand-Verfolgung oder Gesten-Steuerung.

In weiterer Ausgestaltung der Erfindung ist denkbar, dass als Schritttyp ein Entnahmeschritt vorgesehen ist. Bei diesem kann eine Entnahme zumindest eines Bauteils aus zumindest einem Materialbehälter erforderlich sein. Der Materialbehälter kann beim Entnahmeschritt markiert werden, beispielsweise über den Projektor und/oder über eine zusätzliche Lichtquelle. Des Weiteren ist denkbar, dass beim Entnahmeschritt eine Bestätigung vorgesehen ist, bei der nach der Ausführung eine Bestätigung, beispielsweise von der Montageperson, über die Benutzerschnittstelle gefordert wird.

Alternativ oder zusätzlich kann vorgesehen sein, die Hand-Verfolgung dazu zu nutzen, eine automatische Weiterschaltung zum nächsten Arbeitsschritt auszulösen, bzw. eine Fehlermeldung anzuzeigen, beispielsweise, wenn in den falschen Materialbehälter gegriffen wurde.

Bei einer bevorzugten Ausgestaltung der Erfindung kann eine Erfassungsvorrichtung zum Erfassen einer am Bauteil oder Material ausgebildeten oder vorgesehenen Kodierung vorgesehen sein. Bei einem Arbeitsschritt kann dann ein Einlesen der Kodierung nach der Entnahme des Bauteils oder Materials aus dem Materialbehälter gefordert werden. Hierdurch kann eine Überwachung der Montage erfolgen und zum anderen kann sicher festgestellt werden, ob beispielsweise genügend Bauteile im Montagebehälter vorhanden sind. Bei der Kodierung handelt es sich beispielsweise um eine RFID und/oder um einen Barcode und/oder um einen QR-Code und/oder einen Strichcode, oder ähnliches. Das Einlesen der Kodierung erfolgt vorzugsweise beim Entnahmeschritt. Ist ein Einlesen erforderlich, so kann beispielsweise die Erfassungsvorrichtung über den Projektor und/oder über eine Lichtquelle markiert werden. Mit der Kodierung kann somit nachvollzogen werden, welches Bauteil wo verbaut wurde. Das heißt es ist denkbar, dass ein zu montierendes Produkt über eine Kodierung, beispielsweise über eine RFID-Kodierung oder einem QR-Code oder Barcode bei Anordnung am Montagearbeitsplatz erfassbar ist.

Denkbar ist auch mithilfe der Kodierung eine Montageanleitung zu einem Produkt schnell zu starten. Beispielsweise kann die in der Kodierung, bspw. Strichcode, hinterlegte Materialnummer gescannt werden und danach die zugehörige Arbeitsanweisung oder Arbeitsplan gestartet werden.

Es ist denkbar, dass als Schritttyp ein Montagvorgang mit einem Werkzeug, beispielsweise mit einem Elektroschrauber, vorgesehen ist. Ist ein Werkzeug erforderlich, so ist denkbar, dass das Werkzeug von dem Projektor und/oder über eine Lichtquelle markiert wird. Als Elektroschrauber kann beispielsweise ein Schrauber eingesetzt werden, bei dem die Steuerung des Schraubers in diesem integriert ist. Ein derartiger Elektroschrauber kann beispielsweise auch akkubetrieben sein und/oder kabellos mit der Steuereinheit verbunden werden. So können beispielsweise Schraubprogramme beim Elektroschrauber hinterlegt werden. Alternativ oder zusätzlich ist es denkbar, einen einfachen Elektroschrauber vorzusehen, der ein- und ausschaltbar ist. Somit kann als Schritttyp ein Einschalten des Elektroschraubers und als weiterer Schritttyp ein Ausschalten des Elektroschraubers vorgesehen sein.

Des Weiteren ist es denkbar, dass als Schritttyp ein sogenannter Verpackungsschritt vorgesehen ist. Bei diesem Schritttyp wird dann angezeigt, dass ein am Montagearbeitsplatz montiertes Produkt verpackungsbereit ist und dann am Montagearbeitsplatz verpackt werden kann oder von diesem zum Verpacken abgeholt werden kann.

In weiterer Ausgestaltung der Erfindung kann als Schritttyp eine Informationsbestätigung vorgesehen sein. Bei dieser kann beispielsweise eine Kenntnisnahme einer Information, die beispielsweise über den Bildschirm und/oder über den Projektor ausgegeben wird, von der Montageperson über die Benutzerschnittstelle bestätigt werden. Mit anderen Worten muss ein Monteur die Kenntnisnahme einer Information bestätigen, was die Montagesicherheit erhöht.

Der Arbeitsplan mit den Arbeitsschritten kann beispielsweise auf einem Speicher hinterlegt sein. Dieser kann intern beim Montagearbeitsplatz vorgesehen sein und/oder der Montagearbeitsplatz, insbesondere die Steuereinheit, kann extern mit dem Speicher verbunden sein. Der Speicher ist dann beispielsweise über das Intranet, Internet oder kabellos oder kabelgebunden zugänglich.

Erfindungsgemäß ist ein Montagearbeitsplatz vorgesehen, der Mittel hat, die geeignet sind, das Verfahren gemäß einem oder mehrerer der vorhergehenden Aspekte auszuführen.

Erfindungsgemäß kann ein Computerprogramm vorgesehen sein, das Befehle umfasst, die bewirken, dass der Montagearbeitsplatz gemäß einem oder mehrerer der vorhergehenden Aspekte die Verfahrensschritte des Verfahrens nach einem oder mehrerer der vorhergehenden Aspekte ausführt.

Erfindungsgemäß kann ein computerlesbares Medium vorgesehen sein, auf dem das Computerprogramm nach einem der vorhergehenden Aspekte gespeichert ist.

### Kurze Beschreibung der Zeichnungen

Bevorzugte Ausführungsbeispiele der Erfindung werden im Folgenden anhand schematischer Zeichnungen näher erläutert. Es zeigen:
Figur 1 in einer perspektivischen Darstellung einen Montagearbeitsplatz gemäß einem Ausführungsbeispiel,
Figuren 2 bis 7 schematisch eine Oberfläche zur Festlegung von Arbeitsschritten für das Verfahren,
Figur 8 in einer perspektivischen Darstellung ein zu montierendes Bauteil mit einer Markierung,
Figur 9 in einer perspektivischen Darstellung eine Arbeitsfläche mit einer Markierung und
Figur 10 eine Bildschirmoberfläche mit einer Liste unterschiedlicher Arbeitspläne.

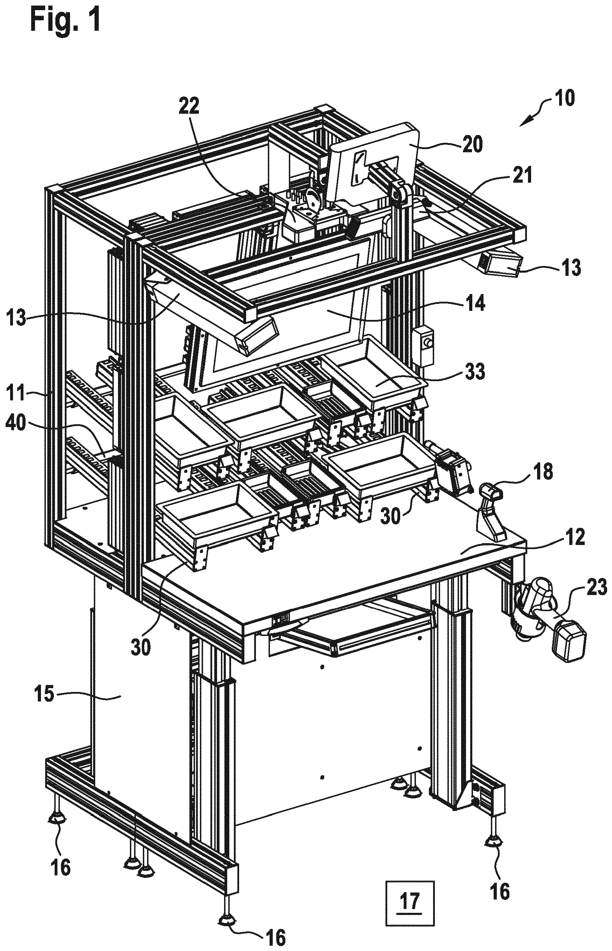

Figur 1 zeigt eine perspektivische Darstellung eines erfindungsgemäßen Montagearbeitsplatzes 10. Auf diesem sollen im Rahmen einer Serienfertigung Baugruppen aus Einzelteilen zusammengebaut werden, und zwar von einem Werker per Hand. Der Montagearbeitsplatz 10 ist aufgrund seiner einfachen Umrüstbarkeit aber auch für die Einzelanfertigung von Baugruppen verwendbar. Die Einzelteile werden in Materialbehältern 33 bereitgestellt, welche in Behälteraufnahmevorrichtungen 30 aufgenommen sind. Diese sind auf Halteprofilen 40 derart befestigt, dass ihre Position und/oder ihre Breite einstellbar sind, so dass eine in ergonomischer Hinsicht optimale Anordnung der Materialbehälter 33 gewählt werden kann. Die Halteprofile 40 sind wiederum an einem Gestell 11 befestigt, welches vorliegend aus Aluminium-Strangpressprofilen zusammengesetzt ist. An dem Gestell 11 ist außerdem eine Arbeitsfläche 12 angeordnet, die vorliegend von einer ebenen Platte mit konstanter Dicke gebildet wird. Auf der Arbeitsfläche 12 wird die o.g. Baugruppe zusammengesetzt. Auf der Arbeitsfläche 12 können Hilfsvorrichtungen angeordnet sein, in welcher die Baugruppe aufgenommen ist. Die Höhenlage der Arbeitsfläche 12 ist verstellbar. Das Gestell 12 ist mit mehreren höhenverstellbaren Stellfüßen 16 versehen, so dass es auf einem vorzugsweise horizontalen Untergrund aufgestellt werden kann.

Oberhalb der Arbeitsfläche 12 ist ein Bildschirm 14 angeordnet, welcher an eine Steuervorrichtung 17 angeschlossen ist. Bei der (grobschematisch dargestellten) Steuervorrichtung 17 kann es sich um eine einzige Vorrichtung oder mehrere miteinander vernetzte Teilvorrichtungen handeln. Auf dem Bildschirm 14 werden beispielsweise die Arbeitsschritte angezeigt, welche der Werker ausführen soll. Weiter ist oberhalb der Arbeitsfläche 12 eine Bildprojektionsvorrichtung 20 angeordnet, welche vorzugsweise digital ansteuerbar ist, wobei sie beispielsweise nach dem LCD-, nach dem DLP- oder nach dem Laser-Prinzip arbeitet. Als Lichtquelle kommen vorzugsweise stromsparende und langlebige LED's zum Einsatz. Die Bildprojektionsvorrichtung 20 ist ebenfalls an die Steuervorrichtung 17 angeschlossen. Mit der Bildprojektionsvorrichtung 20 wird auf die Materialbehälter 33, aus denen im Rahmen des anstehenden Montagschritts ein Einzelteil zu entnehmen ist, ein Bild projiziert. Die Behälteraufnahmevorrichtungen 30 sind hierfür jeweils mit einer Projektionsfläche versehen. Das genannte Bild kann eine Zahl
enthalten, welche die Anzahl der zu entnehmenden Teile angibt. Es kann beispielsweise einen grünen Hintergrund aufweisen, der dem Werker signalisiert, dass in diesen Materialbehälter 33 zu greifen ist. Der farbliche Hintergrund kann pulsierend zwischen "voller Intensität" und "aus" ausgeführt sein, sodass die Aufmerksamkeit des Werkers verstärkt auf die richtige Position gelenkt wird. Auf die Projektionsflächen der Materialbehälter 33 aus denen kein Teil zu entnehmen ist, kann beispielsweise ein Bild mit einem roten Hintergrund projiziert werden. Je nach Anzahl und Anordnungen der Behälteraufnahmevorrichtungen 30 sind mehrere Bildprojektionsvorrichtungen 20 erforderlich, um alle Projektionsflächen auszuleuchten.

Das Gestell 11 ist mit Leuchten 13 versehen, mit welchen die Arbeitsfläche 12 hell ausgeleuchtet werden kann, so dass der Werker ermüdungsfrei arbeiten kann. Die Bildprojektionsvorrichtung 20 kann in diesem Zusammenhang auch dazu genutzt werden, einzelne Bereiche des Arbeitsplatzes heller auszuleuchten, beispielsweise den Bereich in dem die zu montierende Baugruppe angeordnet ist. Weiter kann die Bildprojektionsvorrichtung 20 dazu genutzt werden, die Stelle der zu montierenden Baugruppe anzuleuchten, an der das nächste Einzelteil eingebaut werden soll. Es ist auch denkbar, dass die Bildprojektionsvorrichtung 20 die Leuchten 13 vollständig
ersetzt.

Erfindungsgemäß hat die Bildprojektionsvorrichtung 20 in ihrem Inneren typischerweise eine einzige Bildvorlage, welche projiziert wird und welche beispielsweise von eine DLP- oder einem LCD-Chip gebildet wird. Diese eine Bildvorlage enthält in ggf. verzerrter Form alle Bilder, welche auf die Projektionsflächen projiziert werden sollen. Zur Berechnung der Bildvorlage ist es notwendig, die Anordnung der Projektionsflächen im Raum zu kennen. Ein Vorteil der Erfindung besteht darin, dass diese Positionen nach der mechanischen Einstellung des Montagearbeitsplatzes 10 auf einen neuen Montageprozess besonders einfach ermittelt werden können.

Hierfür sind die Behälteraufnahmevorrichtungen 30 jeweils mit einem ersten Datenträger versehen, wobei die Materialbehälter jeweils mit einem zweiten Datenträger versehen sind. Bei dem ersten und/oder dem zweiten Datenträger kann es sich beispielsweise um einen Barcode, um einen QR-Code, um ein RFID-Tag oder um ein NFC-Tag handeln. Der Montagearbeitsplatz 10 umfasst zumindest eine Lesevorrichtungen 18 mit welcher die ersten und die zweiten Datenträger auslesbar sind. Die Lesevorrichtung 18 ist drahtgebunden oder drahtlos an die Steuervorrichtung 17 anschließbar bzw. angeschlossen. Der erste Datenträger enthält im einfachsten Fall eine eindeutige erste Kennnummer für die jeweils zugeordnete Behälteraufnahmevorrichtung 30. Der zweite Datenträger enthält im einfachsten Fall eine eindeutige zweite Kennnummer des in dem zugeordneten Materialbehälter aufgenommenen Teiletyps. Vorzugsweise ist in einem Materialbehälter 33 nur ein einziger Typ von Einzelteilen aufgenommen. Weiter enthält der zweite Datenträger im genannten einfachsten Fall eine eindeutige zweite Kennnummer des Bautyps des zugeordneten Materialbehälters 33. Hierbei ist anzumerken, dass für unterschiedliche große Einzelteile typischerweise unterschiedlich große Materialbehälter 33 verwendet werden, wobei innerhalb einer Fabrik nur eine begrenzte Anzahl an Typen von Materialbehältern 33 Verwendung finden. Die Behälteraufnahmevorrichtungen 30 sind vorzugsweise verstellbar ausbildet, so dass sie an unterschiedliche Typen, insbesondere an unterschiedliche Baugrößen, von Materialbehältern 33 anpassbar sind. Eine entsprechende Verstellung hat Einfluss auf den Ort der Projektionsfläche und auf den Ort an dem der Werker typischerweise in den
Materialbehälter 33 greift.

Oberhalb der Arbeitsfläche 12 ist eine erste und gewünschtenfalls eine zweite Positionserkennungsvorrichtung 21, 22 angeordnet. Mit diesen soll einerseits die räumliche Lage einer oder beider Hände des Werkers erfasst werden. Im einfachsten Fall wird jeweils nur der Ort eines Bezugspunkts der jeweiligen Hand erfasst. Es ist aber auch denkbar, die Drehlage der betreffenden Hand zu erfassen. Weiter soll mit der zweiten Positionserkennungsvorrichtung 22 die Position eines Werkzeuges 23, insbesondere eines elektrisch angetriebenen Handschraubers, ermittelt werden.

Bei der Positionserkennungsvorrichtung 22 kann es sich um eine Benutzerschnittstelle in Form eines Werkzeugortungsmodul handeln. Bei der Positionserkennungsvorrichtung 21, die eine Benutzerschnittstelle darstellen kann, handelt es sich beispielsweise um einen Beamer oder um eine Kamera. Das Werkzeugortungsmodul kann als Benutzerschnittstelle im indirekten Sinn angesehen werden, da durch sie beispielsweise eine Weiterschaltung der Arbeitsschritte automatisch erfolgt, sobald der Arbeitsschritt korrekt abgearbeitet wurde.

Anzumerken ist, dass vorzugsweise alle Behälteraufnahmevorrichtungen 30 parallel zu einer vertikalen Bezugsebene 15 ausgerichtet sind. Denkbar ist auch, dass die Behälteraufnahmevorrichtungen 30 beziehungsweise Schienen, insbesondere leicht, schräg angeordnet sind, so dass sie sich in Richtung hin zur Vorderkante der Arbeitsfläche 12 gesehen der Arbeitsfläche 12 annähern. Hierdurch kann/können ein Materialbehälter 33 oder Materialbehälter 33 nachrutschen, sobald der vordere Materialbehälter 33 oder ein jeweilige vorderer Materialbehälter 33 entnommen wurde. Durch die genannte Ausrichtung der Behälteraufnahmevorrichtungen 30 ergeben sich für den Werker ergonomisch günstige Greifbewegungen, wenn er in einen Materialbehälter greift.

Die Bezugsebene 15 ist insbesondere parallel zur Richtung der Schwerkraft ausgerichtet. Typischerweise fällt sie wie in Fig. 1 dargestellt mit einer Seitenwand des Gestells 11 zusammen.

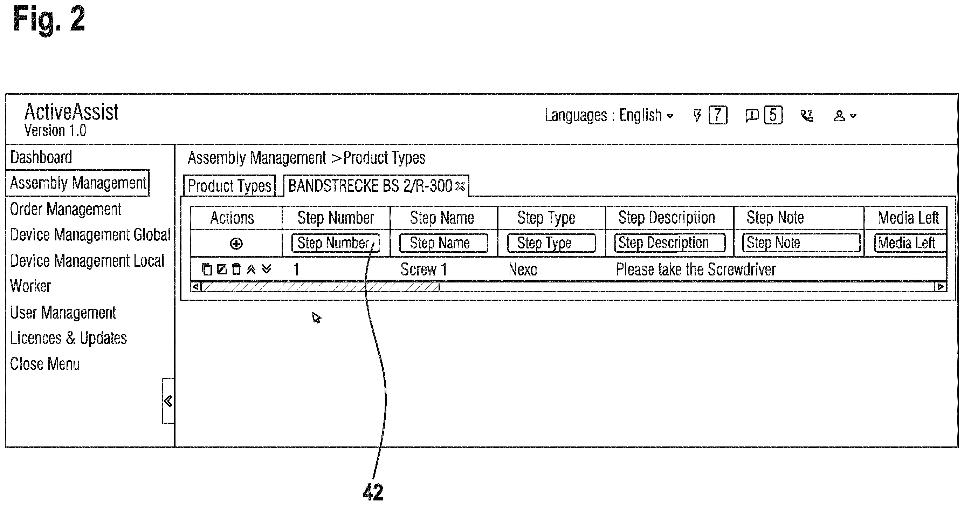

Gemäß Figur 2 ist eine Bildschirmoberfläche dargestellt mit einem Datensatz, der einen Arbeitsschritt innerhalb eines Arbeitsplans aufzeigt. Über eine Benutzerschnittstelle kann dem Arbeitsschritt eine Schrittnummer 42 zugeordnet werden.

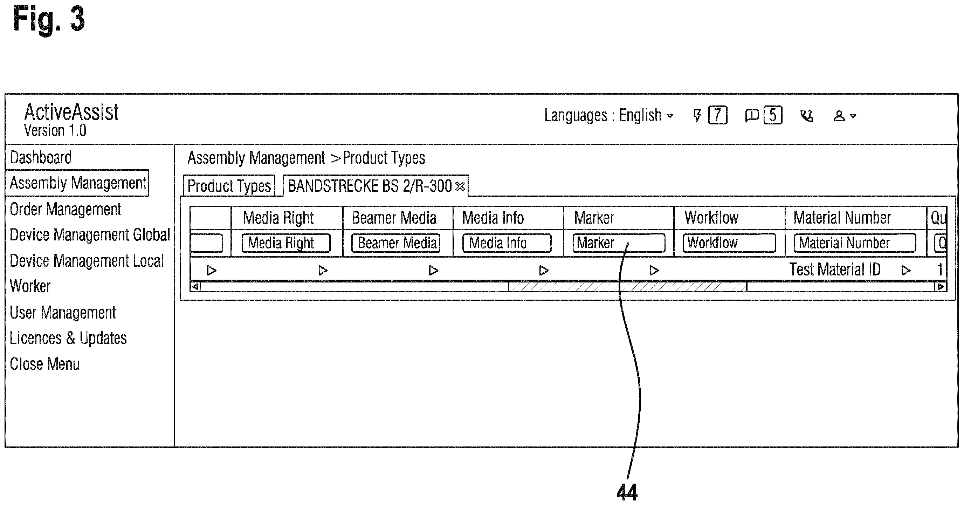

Gemäß Figur 3 ist dem Arbeitsschritt eine Markierung 44 zuordbar.

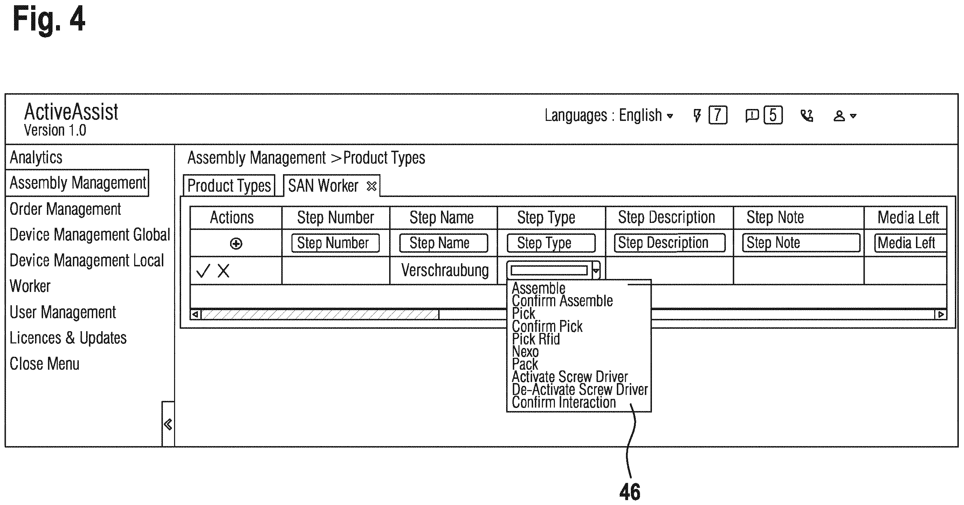

Gemäß Figur 4 ist ein Schritttyp 46 des Arbeitsschritts einstellbar.

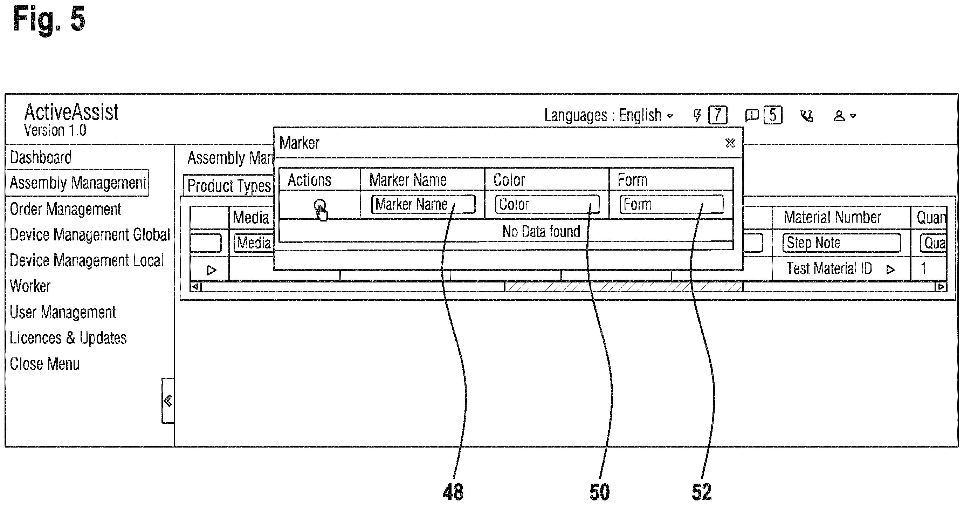

Gemäß Figur 5 kann die dem Arbeitsschritt zugeordnete Markierung eingestellt werden. Hierbei kann ein Markierungsname 48, eine Markierungsfarbe 50 und eine Markierungsform 52 definiert werden. Die Markierung kann dann im Einsatz beispielsweise als Pfeil ausgebildet sein, der auf eine Schraubstelle oder Montagestelle bei einem Bauteil weist. Des Weiteren kann beispielsweise eine Form eines Bauteils auf eine Platine projiziert werden, was dann eine Montage-Position und -Orientierung darstellen kann.

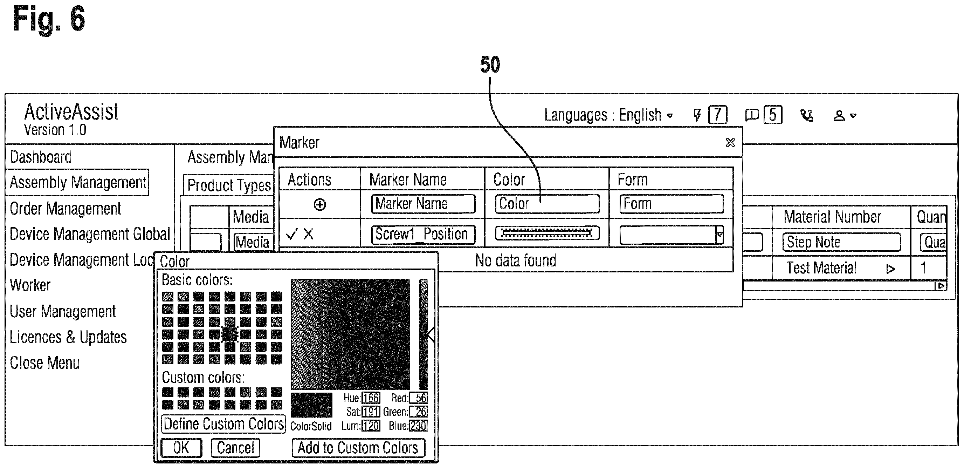

Figur 6 zeigt die Einstellung der Markierungsfarbe 50.

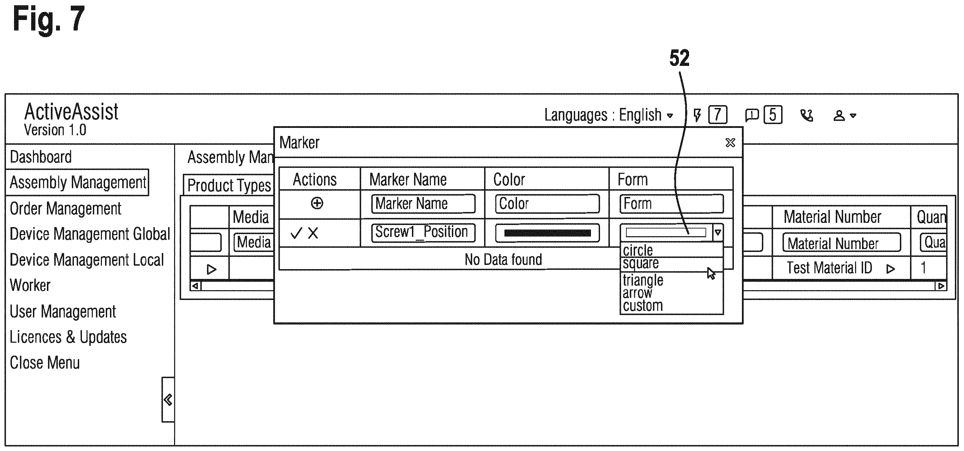

Gemäß Figur 7 ist die Einstellung der Markierungsform 52 ersichtlich.

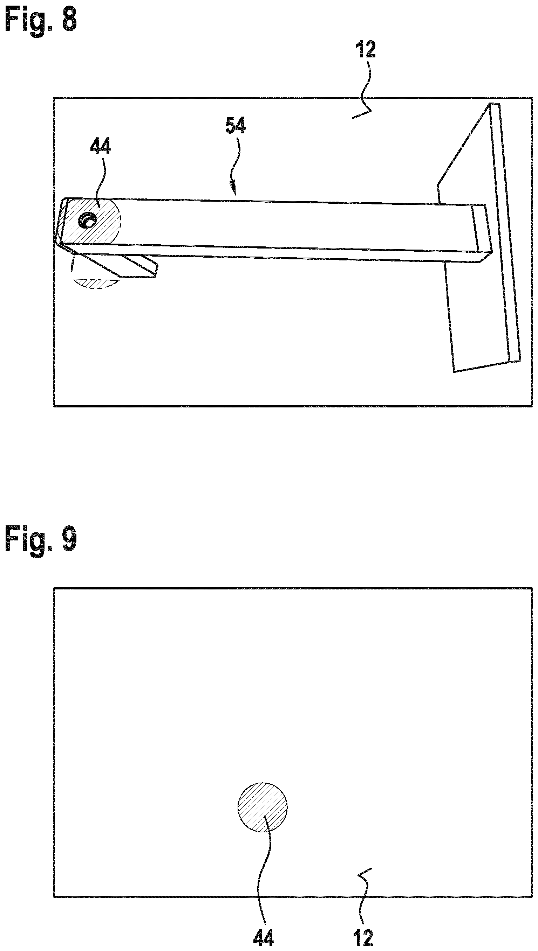

In Figur 8 ist perspektivisch ein zu montierendes Produkt 54 dargestellt, das auf der Arbeitsfläche 12 angeordnet ist. Dieses ist mit der Markierung 44 über die Bildprojektionsvorrichtung 20 markiert. Die Markierung 44 ist hierbei kreisförmig und zeigt eine Position auf, bei der ein Bauteil, beispielsweise eine Schraube, montiert werden soll.

Gemäß Figur 9 ist die Arbeitsfläche 12 mit der Markierung 44 dargestellt, wobei die kreisförmige Ausgestaltung der Markierung 44 erkennbar ist.

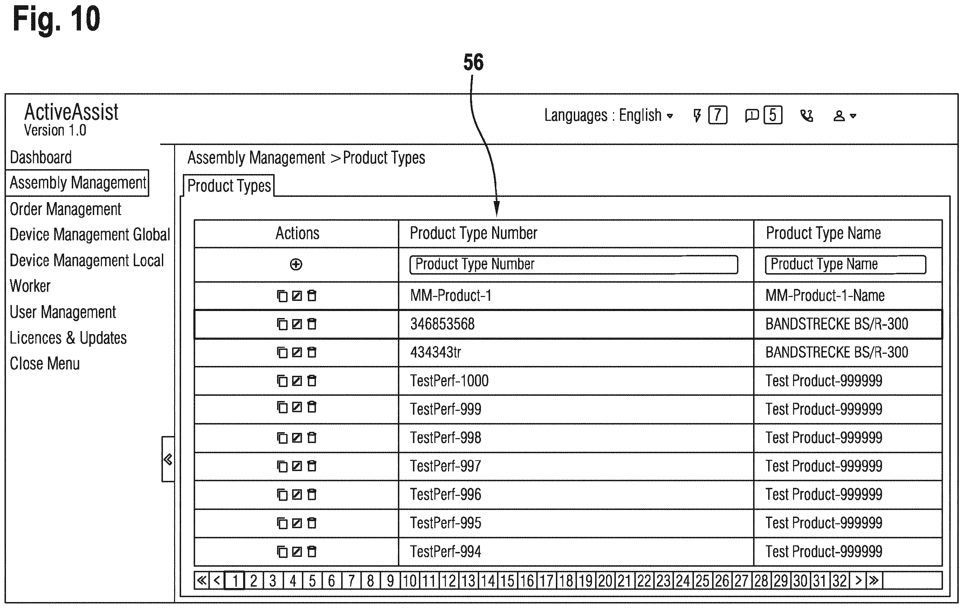

Gemäß Figur 10 ist eine Bildschirmoberfläche gezeigt, bei der eine Liste ersichtlich ist. Die Liste weist eine Vielzahl von Arbeitsplänen 56 auf, die jeweils eine oder mehrere Arbeitsschritt/e haben, die entsprechend der vorstehend angeführten Figuren definierbar sind.

Offenbart ist ein Verfahren für einen Montagearbeitsplatz. Dieser hat zumindest eine Arbeitsfläche und/ oder zumindest einen Materialbehälter. Des Weiteren kann der Montagearbeitsplatz einen Projektor aufweisen, über den auf einer Projektionsfläche Informationen abbildbar sind. Die Projektionsfläche kann zumindest einen Teil der Arbeitsfläche und zumindest einen Abschnitt des zumindest einen Materialbehälters umfassen. Über eine Steuereinheit kann ein elektronischer Arbeitsplan mit einer Vielzahl von Arbeitsschritten abgearbeitet werden. Bei zumindest einem Arbeitsschritt oder einem Teil der Arbeitsschritte wird zumindest eine Information über den Projektor auf der Projektionsfläche abgebildet. Bei der Information handelt es sich beispielsweise um eine Montageinformation und/oder um eine Markierung und/oder um eine Behältermarkierung für den zumindest einen Materialbehälter.

### Bezugszeichenliste

- 10: Montagearbeitsplatz
- 11: Gestell
- 12: Arbeitsfläche
- 13: Leuchte
- 14: Bildschirm
- 15: vertikale Bezugsebene
- 16: Stellfuß
- 17: Steuervorrichtung
- 18: Lesevorrichtung
- 19: Position des Werkers
- 20: Bildprojektionsvorrichtung
- 21: erste Positionsbestimmungsvorrichtung
- 22: zweite Positionsbestimmungsvorrichtung
- 23: Werkzeug (Schrauber)
- 30: Behälteraufnahmevorrichtung
- 31: erster Datenträger
- 32: zweiter Datenträger
- 33: Materialbehälter
- 34: Referenzpunkt
- 40: Halteprofil
- 42: Schrittnummer
- 44: Markierung
- 46: Schritttyp
- 48: Markierungsname
- 50: Markierungsfarbe
- 52: Markierungsform
- 54: Produkt
- 56: Arbeitsplan

## Patentansprüche

1. Verfahren für einen Montagearbeitsplatz (10), der eine Arbeitsfläche (12) und zumindest einen Materialbehälter (33) hat, und der einen Projektor (20) aufweist, über den auf einer Projektionsfläche Informationen (44) abbildbar sind, wobei die Projektionsfläche zumindest einen Teil der Arbeitsfläche (12) und zumindest einen Abschnitt des zumindest einen Materialbehälters (33) umfasst, wobei eine Steuereinheit (17) vorgesehen ist, die einen elektronischen Arbeitsplan (56) mit einer Mehrzahl von Arbeitsschritten aufweist, wobei die Arbeitsschritte abgearbeitet werden, und wobei bei den Arbeitsschritten zumindest eine Information (44) über den Projektor (20) auf der Projektionsfläche abgebildet wird, wobei als Information eine Montageinformation vorgesehen ist, bei der eine Anleitung einer Montage projiziert wird, und wobei als Information eine Markierung (44) vorgesehen ist, die eine Position aufzeigt, bei der ein Bauteil angeordnet werden soll, und wobei als Information eine Behältermarkierung für den Materialbehälter (33) vorgesehen ist, um den zu benutzenden Materialbehälter (33) hervorzuheben, wobei der Projektor (20) in seinem Inneren eine einzige Bildvorlage enthält, die alle Bilder enthält, welche auf die Projektionsfläche projiziert werden, wobei eine Benutzerschnittstelle (21, 22) vorgesehen ist, über die von einer Person Daten für das Verfahren eingebbar sind, wobei die Benutzerschnittstelle extern vorgesehen ist und kabellos oder über Kabel mit der Montagevorrichtung verbunden ist, wobei eine Maske auf einem Bildschirm vorgesehen ist, über die zumindest ein Arbeitsschritt und der Arbeitsablauf definierbar sind, wobei der Bildschirm ein externer Bildschirm ist, der kabellos oder über ein Kabel mit der Montagevorrichtung verbunden ist, wobei einem jeweiligen Arbeitsschritt ein Typ der Markierung und/oder eine Position der Markierung über die Benutzerschnittstelle zugeordnet wird, wobei als Schritttyp für den Arbeitsschritt ein Montageschritt vorgesehen ist, bei dem ein mit dem Arbeitsschritt zugeordnetes Bauteil montiert wird, und wobei als Schritttyp für den Arbeitsschritt ein zu bestätigender Arbeitsschritt vorgesehen ist, bei dem nach der Ausführung eine Bestätigung über die Benutzerschnittstelle gefordert wird, und wobei als Schritttyp für den Arbeitsschritt ein Entnahmeschritt vorgesehen ist, bei dem eine Entnahme eines Bauteils aus dem zumindest einen Materialbehälter (33) erforderlich ist, und wobei als Schritttyp für den Arbeitsschritt ein Montagevorgang mit einem Werkzeug vorgesehen ist.

2. Verfahren nach Anspruch 1, wobei die Montageinformation in Form von zumindest einem Bild und/oder von zumindest einem Video und/oder als Text ausgestaltet ist.

3. Verfahren nach Anspruch 1 oder 2, wobei die Montageinformation in einem freien Bereich der Arbeitsfläche (12) abgebildet wird.

4. Verfahren nach einem der vorhergehenden Ansprüche, wobei die Behältermarkierung auf denjenigen Materialbehälter (33) abgebildet wird, aus dem zumindest ein Bauteil zu entnehmen ist.

5. Verfahren nach einem der vorhergehenden Ansprüche, wobei der Ort oder die Orte der Abbildung zumindest einer Information für alle Arbeitsschritte gleich ist/sind oder für einen jeweiligen Arbeitsschritt individualisiert im Arbeitsplan definierbar ist/sind.

6. Verfahren nach einem der vorhergehenden Ansprüche, wobei dem Arbeitsschritt oder einem jeweiligen Arbeitsschritt zumindest eine Textinformation und/oder zumindest eine Zahleninformation zugeordnet wird/werden.

7. Verfahren nach Anspruch 6, wobei als Zahleninformation eine Schrittnummer vorgesehen ist.

8. Verfahren nach einem der vorhergehenden Ansprüche wobei als Schritttyp für den Arbeitsschritt eine Informationsbestätigung vorgesehen ist, bei der eine Kenntnisnahme einer Information, die über den Bildschirm und/oder dem Projektor (20) ausgegeben wird, von der Montageperson über die Benutzerschnittstelle (21, 22) zu bestätigen ist.

9. Verfahren nach einem der vorhergehenden Ansprüche, wobei eine Erfassungsvorrichtung (18) zum Erfassen einer am Bauteil ausgebildeten Kodierung vorgesehen ist, und wobei bei einem Arbeitsschritt ein Einlesen der Kodierung nach der Entnahme des Bauteils aus dem Materialbehälter (33) gefordert wird.

10. Montagearbeitsplatz, der einen Projektor (20) und zumindest einen Materialbehälter (33) und zumindest eine Arbeitsfläche (12) aufweist, und Mittel, die geeignet sind, das Verfahren nach einem der vorhergehenden Ansprüche auszuführen.

11. Computerprogramm, umfassend Befehle, die bewirken, dass der Montagearbeitsplatz nach Anspruch 10 die Verfahrensschritte nach einem der Ansprüche 1 bis 9 ausführt.

12. Computerlesbares Medium, auf dem das Computerprogramm nach Anspruch 11 gespeichert ist.

## Claims

1. Method for an assembly workstation (10) which has a working surface (12) and at least one material container (33), and which has a projector (20) by means of which information (44) can be presented on a projection surface, wherein the projection surface comprises at least one part of the working surface (12) and at least one section of the at least one material container (33), wherein a control unit (17) is provided which has an electronic work schedule (56) with a multiplicity of working steps, wherein the working steps are processed, and wherein at least one information item (44) is presented on the projection surface by means of the projector (20) during the working steps, wherein an assembly information item is provided as information, for which an assembly instruction is projected, and wherein a marking (44), which indicates a position at which a component is to be arranged, is provided as information, and wherein a container marking for the material container (33) is provided as information, in order to highlight the material container (33) which is to be used, wherein the projector (20) contains in its interior a single image template which contains all the images which are projected onto the projection surface, wherein a user interface (21, 22) is provided via which a person can input data for the method, wherein the user interface is provided externally and is connected to the assembly device without a cable or by cable, wherein a mask is provided on a screen, by means of which mask at least one working step and the working sequence can be defined, wherein the screen is an external screen which is connected to the mounting device without a cable or by cable, wherein a type of marking and/or a position of the marking is assigned to a respective working step via the user interface, wherein an assembly step, during which a component which is assigned to the working step is mounted, is provided as a step type for the working step, and wherein a working step which is to be confirmed, during which a confirmation is requested via the user interface after the execution, is provided as a step type for the working step, and wherein an extraction step, during which extraction of a component from the at least one material container (33) is necessary, is provided as a step type for the working step, and wherein an assembly process with a tool is provided as a step type for the working step.

2. Method according to Claim 1, wherein the assembly information is configured in the form of at least one image and/or at least one video and/or as text.

3. Method according to Claim 1 or 2, wherein the assembly information is presented in a free area of the working surface (12).

4. Method according to one of the preceding claims, wherein the container marking is presented on that material container (33) from which at least one component can be extracted.

5. Method according to one of the preceding claims, wherein the location or the locations of the presentation of at least one information item is/are the same for all the working steps or can be defined in an individualized fashion in the work schedule for a respective working step.

6. Method according to one of the preceding claims, wherein at least one text information item and/or at least one numerical information item are/is assigned to the working step or a respective working step.

7. Method according to Claim 6, wherein a step number is provided as numerical information.

8. Method according to one of the preceding claims, wherein an information confirmation, in which awareness of information which is output via the screen and/or via the projector (20) has to be confirmed by the assembly person via the user interface (21, 22), is provided as a step type for the working step.

9. Method according to one of the preceding claims, wherein a sensing device (18) for sensing a code which is formed on the component is provided, and wherein reading in of the code after the extraction of the component from the material container (33) is requested in a working step.

10. Assembly workstation which has a projector (20) and at least one material container (33) and at least one working surface (12), and means which are suitable for executing the method according to one of the preceding claims.

11. Computer program comprising commands which cause the assembly workstation according to Claim 10 to execute the method steps according to one of Claims 1 to 9.

12. Computer-readable medium on which the computer program according to Claim 11 is stored.

## Revendications

1. Procédé pour un poste de travail de montage (10) qui dispose d'un plan de travail (12) et d'au moins un bac à pièces (33), et qui présente un projecteur (20) permettant de représenter des informations (44) sur une surface de projection, la surface de projection comprenant au moins une partie du plan de travail (12) et au moins une portion dudit au moins un bac à pièces (33), dans lequel une unité de commande (17) est prévue qui présente un programme de travail électronique (56) avec une pluralité d'étapes de travail, les étapes de travail étant exécutées, et dans les étapes de travail au moins une information (44) étant représentée sur la surface de projection par le projecteur (20), dans lequel une information de montage est prévue comme information lors de laquelle une instruction d'un montage est projetée, et dans lequel un marquage (44) est prévu comme information qui montre une position où un composant doit être disposé, et dans lequel un marquage de bac pour le bac à pièces (33) est prévu comme information afin de mettre en évidence le bac à pièces (33) à utiliser, dans lequel le projecteur (20) contient à l'intérieur un seul modèle d'image qui contient toutes les images qui sont projetées sur la surface de projection, une interface utilisateur (21, 22) étant prévue par laquelle une personne peut saisir des données pour le procédé, l'interface utilisateur étant prévue en externe et étant reliée au dispositif de montage avec ou sans fil, dans lequel un masque est prévu sur un écran par lequel ladite au moins une étape de travail et la séquence de travail peuvent être définies, l'écran étant un écran externe qui est relié au dispositif de montage avec ou sans fil, une étape de travail respective étant associée à un type du marquage et/ou une position du marquage par l'intermédiaire de l'interface utilisateur, dans lequel une étape de montage est prévue comme type d'étape pour l'étape de travail dans laquelle un composant associé à l'étape de travail est monté, et une étape de travail à confirmer étant prévue comme type d'étape pour l'étape de travail dans laquelle une confirmation par l'intermédiaire de l'interface utilisateur est demandée après l'exécution, et une étape de prélèvement étant prévue comme type d'étape pour l'étape de travail dans laquelle un prélèvement d'un composant sur ledit au moins un bac à pièces (33) est nécessaire, et une opération de montage avec un outil étant prévue comme type d'étape pour l'étape de travail.

2. Procédé selon la revendication 1, dans lequel l'information de montage est configurée sous la forme d'au moins une image et/ou d'au moins une vidéo et/ou de texte.

3. Procédé selon la revendication 1 ou 2, dans lequel l'information de montage est représentée dans une zone libre du plan de travail (12).

4. Procédé selon l'une quelconque des revendications précédentes, dans lequel le marquage de bac est représenté sur celui des bacs à pièces (33) sur lequel il faut prélever au moins un composant.

5. Procédé selon l'une quelconque des revendications précédentes, dans lequel le ou les endroits de la représentation d'au moins une information pour toutes les étapes est/sont le (s) même(s) ou peut/peuvent être défini(s) de manière personnalisée dans le programme de travail pour une étape de travail respective.

6. Procédé selon l'une quelconque des revendications précédentes, dans lequel l'étape de travail ou une étape de travail respective est associée à au moins une information textuelle et/ou à au moins une information numérique.

7. Procédé selon la revendication 6, dans lequel un numéro d'étape est prévu comme information numérique.

8. Procédé selon l'une quelconque des revendications précédentes dans lequel une confirmation d'information est prévue comme type d'étape pour l'étape de travail, dans laquelle le personnel de montage doit confirmer par l'intermédiaire de l'interface utilisateur (21, 22) qu'il a pris connaissance d'une information qui a été sortie par l'intermédiaire de l'écran et/ou du projecteur (20).

9. Procédé selon l'une quelconque des revendications précédentes, dans lequel un dispositif de détection (18) pour détecter un codage réalisé sur le composant est prévu, et dans lequel, dans une étape de travail, une lecture du codage est demandée après le prélèvement du composant sur le bac à pièces (33).

10. Poste de travail de montage qui présente un projecteur (20) et au moins un bac à pièces (33) et au moins un plan de travail (12), et des moyens qui sont adaptés pour exécuter le procédé selon l'une quelconque des revendications précédentes.

11. Programme informatique, comprenant des instructions qui amènent le poste de travail de montage selon la revendication 10 à exécuter les étapes de procédé selon l'une quelconque des revendications 1 à 9.

12. Support lisible par ordinateur, sur lequel est enregistré le programme informatique selon la revendication 11.
